# EUROPEAN PATENT SPECIFICATION

(11) **EP 3 100 835 B1**
(45) Date of publication and mention of the grant of the patent: **08.11.2017**
(21) Application number: 16172436.4
(22) Date of filing: 01.06.2016
(51) Int. Cl.: B27M 3/18, B27M 1/08, G05B 19/418, B23D 59/00, B27B 31/00, B27M 3/00, B27B 1/00

(54) **OPTIMISATION MANAGEMENT METHOD AND SYSTEM FOR LEAN PRODUCTION IN PANEL PRODUCTION LINES IN THE FURNITURE INDUSTRY**
OPTIMIERUNGSVERWALTUNGSVERFAHREN UND SYSTEM ZUR SCHLANKEN PRODUKTION IN PLATTENPRODUKTIONSLINIEN IN DER MÖBELINDUSTRIE
PROCÉDÉ ET SYSTÈME DE GESTION D'OPTIMISATION DE PRODUCTION PAUVRE DANS DES LIGNES DE PRODUCTION DE PANNEAUX DANS L'INDUSTRIE DU MEUBLE

(30) Priority: 05.06.2015 IT UB20151327
(43) Date of publication of application: 07.12.2016
(73) Proprietor: G.P. Consulting di Giuseppe Pritelli & C. S.a.s., 47841 Cattolica (Rimini) (IT)
(72) Inventor: PRITELLI, Giuseppe, 47841 Cattolica (RN) (IT)
(74) Representative: Gustorf, Gerhard

(56) References cited:
- EP-A2- 0 891 847
- DE-A1-102004 036 593
- GB-A- 2 306 105
- PREKWINKEL F: "Rechnergeführte Produktionssysteme für die Holzindustrie", HOLZ ALS ROH- UND WERKSTOFF, SPRINGER-VERLAG. BERLIN, DE, vol. 49, no. 12, 1 December 1991 (1991-12-01), pages 457-464, XP002122120, ISSN: 0018-3768
- RICHARD M H CHENG ET AL: "a computer-aided wood cutting system for maximum utilization of material", ADVANCES IN INSTRUMENTATION, INSTRUMENT SOCIETY OF AMERICA, RESEARCH TRIANGLE PARK, US, vol. 32, no. 1, 1 January 1977 (1977-01-01), pages 65-73, XP002122121,

## Description

### DETAILED DESCRIPTION

### Technical field of the invention

The so-called lean manufacturing or lean production) represents an industrial transformation theory derived from Toyotism (*Toyota Production System -* TPS - from the Japanese vehicle manufacturer within which it was conceived, experimented and adopted), method of production organisation on which the idea of "doing more with less" is based, i.e. using the available resources in the most rational manner possible, with the aim of increasing productivity, aiming at minimising waste with respect to surplus activity (limiting the activities that do not produce value), surplus movement (limiting movements reaching far materials from a utilisation point of view), surplus defects (limiting wastes as well as process repetitions), surplus stock (limiting purchase and production of surplus material with respect to the subsequent process needs), surplus production (limiting more production than required by the subsequent process or client, or, under another approach, limiting warehouse stock), surplus awaiting (limiting the use of time in a non-productive manner) and transport surplus (limiting the movement of material without needs related to the creation of value).

A criterion deriving from these surplus minimising canons and constituting the processing of the canons for the relative concrete implementation, *rectius*, aimed at the relative implementation, is the criterion proximity, or rule of association in the process of elements or machining operations, which combines in a plurality of perspectives, variously intersecting as a function of the technical objectivities interpolated with respect to the distinctive optimisation options of the reference industrial sector and the specific workshop therewithin.

In the furniture industrial production sector, the application of lean canons of the industrial transformation theory finds particularly fertile ground, considering the uniformity of the pieces that contribute to composing the finished product, substantially and mainly wood panels or wood surrogates, while in other sectors, considering the mechanical industry in its various forms, causes the lack of homogeneity of the components to be produced and/or assembled, the translation of the simplification canons is much more complex to implement.

In the aforementioned specific sector for the industrial production of furniture, the proximity criterion may be conjugated in the following perspectives:
origin proximity: the criterion that binds various elements on the grounds of deriving from the same type of sheet, wherein this is used to indicate the sheet of commercial dimensions from which the panels constituting the products are cut;
order proximity: the criterion which binds various elements or kits of elements on the ground of belonging to the same order, wherein the orders are on the contrary constituted by the entirety of elements bound by an order and organised according to various proximity criteria;
kit proximity: the criterion which binds various elements on the grounds of belonging to the same kit;
origin proximity: the criterion which binds various elements on the grounds of belonging to a common material or semi-finished product origin;
intended use proximity: the criterion which binds various orders, kits and elements in that simultaneously directed to the same end of line gate;
process proximity: the criterion which binds various elements on the grounds of having to traverse the same transformation path;
reference proximity: the criterion which binds various elements on the grounds of having to intervene on the same or homogeneous elements constituting the product; e.g. main panel faces, peripheral faces, side, edge etc.

Such minimising canons and criteria of the industrial transformation theory should refer to the transformations, given that in any manufacturing process the materials are subjected to a transformation sequence which, as a function of the action performed on the elements to be processed, may be substantially divided into three types:
transformation of space: movement of the material from one position to another;
transformation of species: processes that alternate characteristics and/or shape of the element, which, with particular attribution and reference to the furniture industrial production sector, may be carried out and aggregated for: process proximity, e.g. all boring operations, all edging operations e.t.c.; reference proximity, e.g. main faces of the panel, peripheral faces, sizes, edges, e.t.c.;
time transformation: operations that alter the sequential order of the elements, e.g. buffer e.t.c.
   Document EP 0 891 847 discloses a method according to the preamble of claim 1.

### Objects of the invention

In this context, the main object of the present invention is to provide an innovative and functional process suitable to create a series of transformations capable, starting from a step of dividing a sheet into panels with a surface optimiser and with random exit of the panels, of obtaining a systematic unloading in orders and kits, minimising all passive operations.

Another object of the present invention is to provide a device and an operating line, reducing or reducible to the maximum as regards the relative size, for the implementation of the aforementioned process.

Another object of the present invention is to attain the aforementioned objects through a method and a device of relative implementation that is versatile and polyvalent as possible as regards the type of furniture to be produced.

A further object of the present invention is to attain the aforementioned objects through a method and a device of relative implementation that are simple and efficient, safe in use and relatively inexpensive considering the results practically attained therewith.

### Summary of the invention

These and other objects are attained through the method for the optimisation management of the production lines of panels in the furniture industry according to claim 1, particularly with production organisation into order batches, comprising at least one sorting module (20) in form of table panels (1) in the logistics of the production line preferably pursuing the order batches strategy, implementing operations for the reception, arrangement, orientation, aggregation and positioning of panels (1) from horizontal positions to vertical positions, as well as translation with respect to the ground of assemblies and groups of panels (1) laid on the side, oriented vertically, sorted by lines and columns on vector-matrix means (22) with parallel linear cells (24), suitable to allow the deposition and extraction of the panels (1) from the top and side in the direction of the linearity of the cells (24), where the contingent order of arrangement or the mapping of the panels (1), the methods of loading and unloading the panels (1) and the translation of the vector-matrix (22) with respect to the ground are defined by a computerised logic optimising the combination of a random-stochastic or tendentially random-stochastic loading of the panels (1) upstream and a tendentially organised unloading for groups as a function of the purpose of the batch and/or the contingent needs of the production line or portion of production line downstream. As well as with the device and operating line for the implementation of the method according to claim 4, comprising at least one sorting complex (20) within the development of the production line, constituted by at least one handling-sorting unit (20) including at least one container with cells or vector-matrix (22) translatable with respect to the ground, adapted to hold a plurality of panels (1) laid on the side oriented vertically in the parallel channel (24) and sorted by lines and columns, contingently insertable and removable both from the top and laterally, where the contingent order of arrangement or mapping of the panels (1), the methods of loading and unloading the panels (1) and the translation of the cells or vector-matrix container (22) with respect to the ground are defined by a computerised logic optimising the combination of a stochastic or tendentially stochastic loading of the panels (1) upstream and a tendentially organised unloading for groups of panels (1) as a function of the purpose of the batch and/or the contingent needs of the production line or portion of production line downstream.

### Identification of the attached drawings

Further characteristics and advantages of the method and device for the optimisation management of the production lines of panels in the furniture industry according to the present invention, shall be more apparent from the following detailed description of a relative preferred but non-exclusive embodiment, represented solely by way of non-limiting example in the attached drawings, wherein:
Figure 1 shows a plan view of an embodiment of an organised system for the implementation of the method for the optimisation management of the production lines of panels in the furniture industry according to the present invention;
Figure 2 shows a perspective view of the first operating station of the system;
Figure 3 schematically illustrates an embodiment of the semi-finished product in the first operating station of the system;
Figure 4 shows a plan view of the second operating station of the system, mainly constituting the device for the implementation of the method according to the present invention;
Figure 5 shows a perspective view of the second operating station of the system, mainly constituting the device for the implementation of the method according to the present invention;
Figure 6 shows a perspective view of an operation example of the second operating station of the system, mainly constituting the device for the implementation of the method according to the present invention;

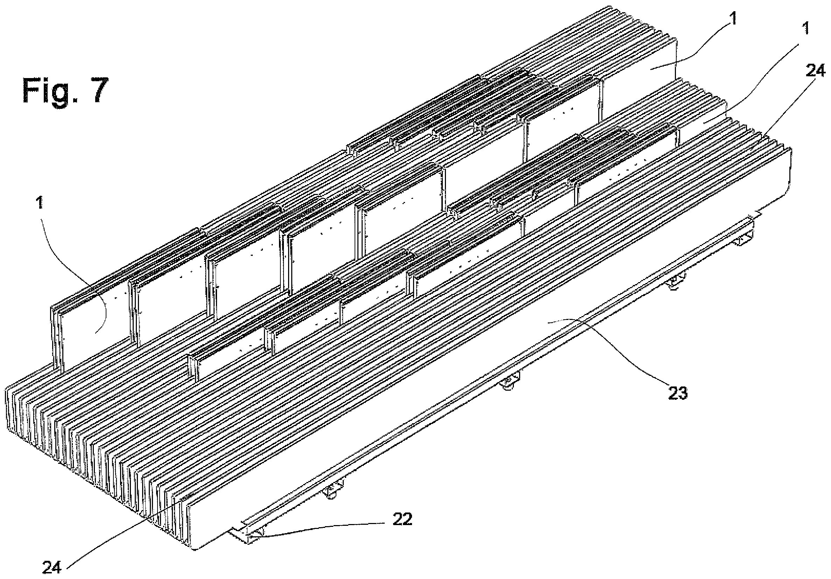

Figure 7 shows a perspective view of a detail of the second operating station of the system, mainly constituting the device for the implementation of the method according to the present invention;
Figure 8 shows a plan view of the third operating station of the system;
Figure 9 shows a perspective view of the fourth operating station of the system;
Figure 10 schematically shows in perspective view an embodiment of the product of the fourth operating station of the system.

### Static description of the embodiment

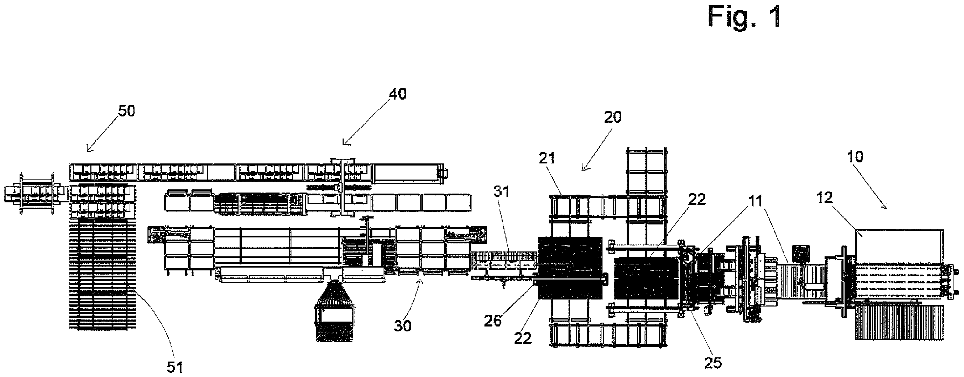

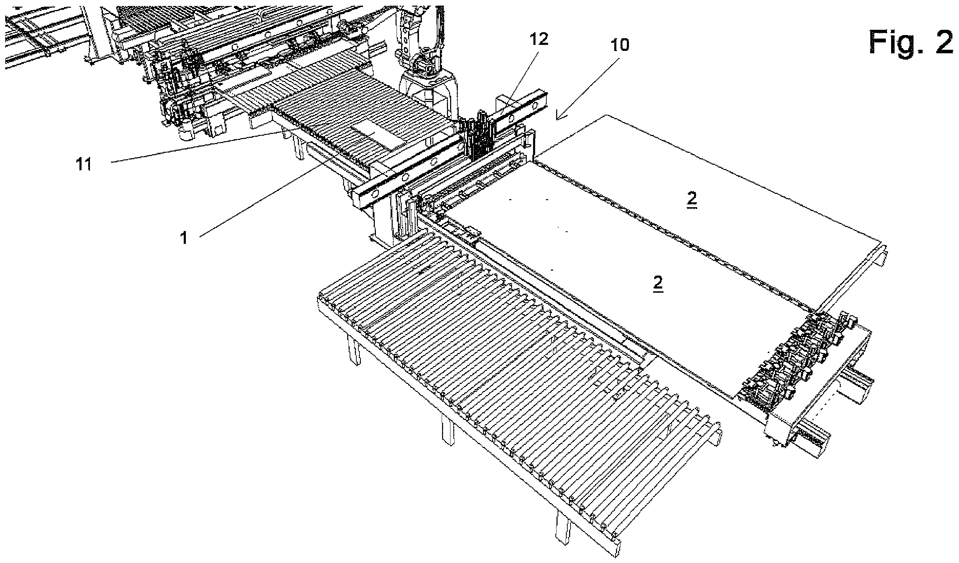

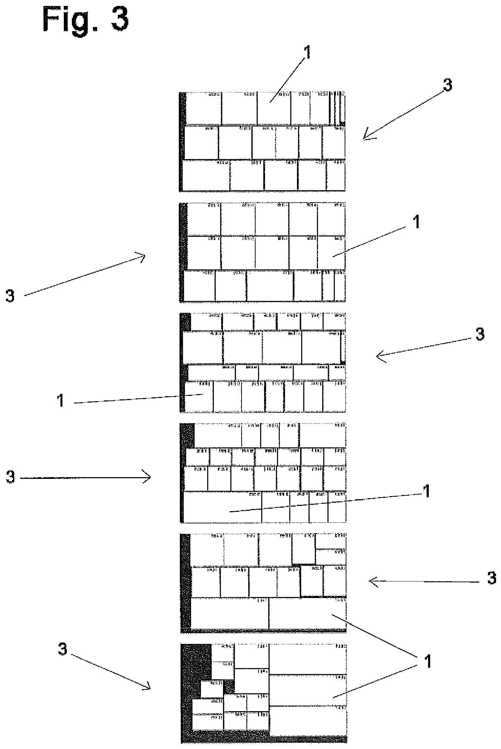

I.e. the description of the system schematically illustrated in the completeness of the implementation embodiment thereof in figure 1, with reference to which a nesting device, illustrated in detail in figure 2 is indicated in its entirety with 10, where commercial panel sheets on a conveyor line 11, passing lying on a device 12 for the implementation of the nesting process, or with maximisation of the exploitation efficiency of the semi-finished product, and the attainment of panels 1 of various sizes, defined by the computerised logic of the method, adapted to define all panels constituting the furniture obtained and obtainable by the production line, as indicated by way of example in figure 3, are indicated with 3.

In the nesting device 10 there may also be conceived operator groups, not illustrated, for performing some operations, anticipating some values where necessary then completed in the actual downstream finishing unit 30, dedicated to processing the piece.

In addition, at the exit of the nesting device 10 there shall be deemed arranged means, not illustrated, printed and applicators of stickers to the panels 1, with barcodes or, preferably integrated chips (*chip*, *RFID - Radio Frequency Identification, trasponder*), containing the codification of all relative source, destination and location identification elements, for traceability purposes, as processed by the computerised logic of implementation of the method.

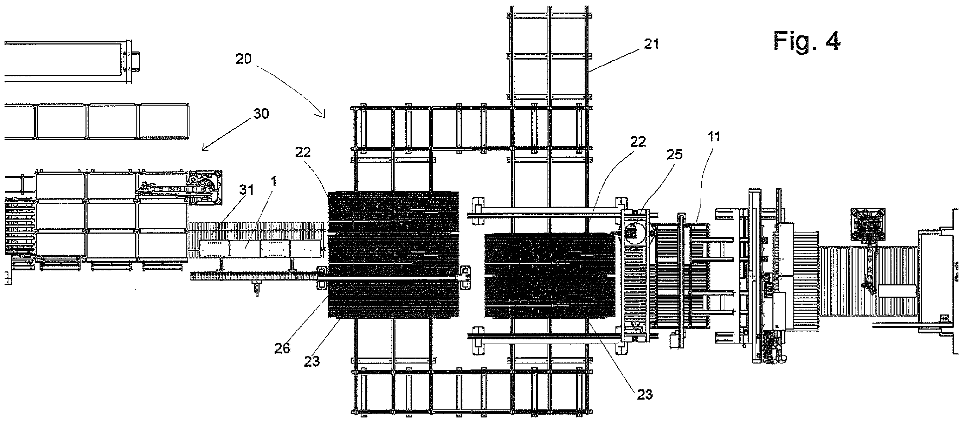

A handling-sorting unit, detailed in figure 4, constituted by a tracks circuit 21 on which there slides two carriages, indicated in their respective entirety with 22, comprising a planar rack 23, constituted by a plurality of pockets 24 or parallel channel-like cells are indicated in their entirety with 20.

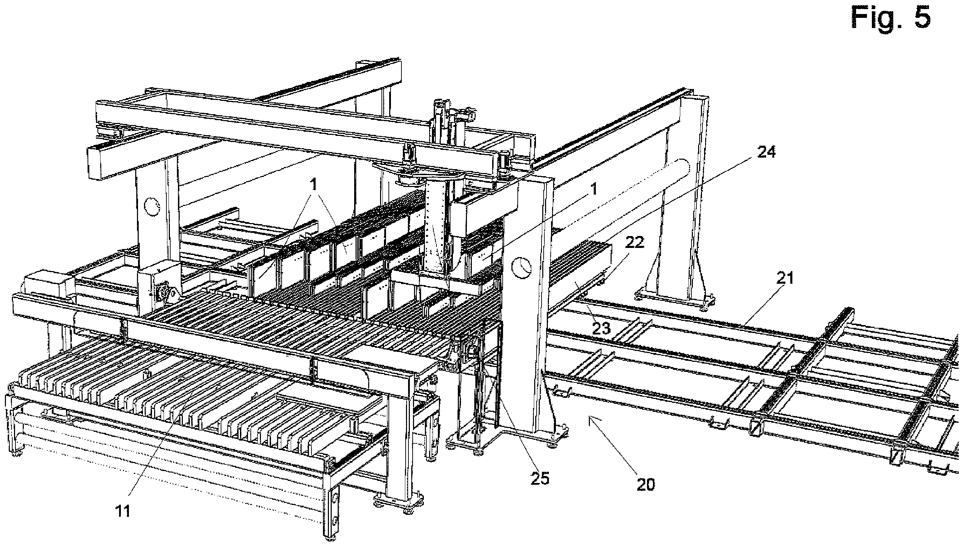

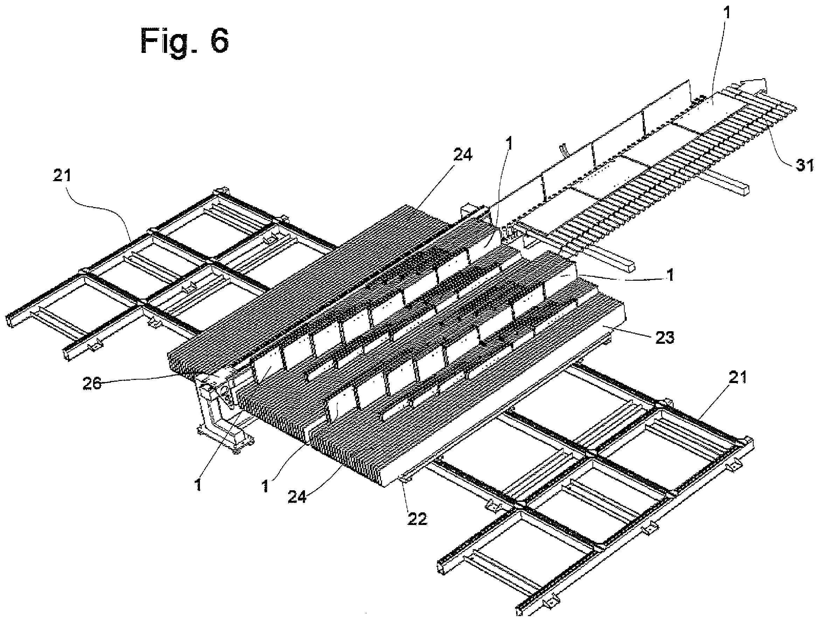

The carriages 22 operate on the circuit 21 according to a computerised logic of optimisation of their functions as interpolated with parameters regarding a loading method and times:
from a loading position with respect to a conveyor 11 of the nesting device 10, illustrated in figure 5, at which there is arranged a suspended handling device 25, of the Cartesian type in the illustrated embodiment, alternatively actuatable such as an anthropomorphic robot, adapted to grip - translate - directing the panels 1 brought to the plane by the conveyor 11 of the nesting device 10 and vertically insert them into the pockets 24 or parallel channel-like cells of the racks 23, in the order and with the criteria determined by the computerised logic of implementation of the method, preferably reproducing the arrangement of the order with panels 1 positioned by scaling dimensions, which anticipate the structure of the stacks outlined hereinafter;
at an unloading position, illustrated in figure 6, supplying an underlying and better described hereinafter processing and finishing unit 30, and thus a relative conveyor 31, at which there is arranged an extractor device 26, of the of the pusher and tilting chute type, adapted to engage - translate - orienting singularly or in a plurality aligned in rows of panels 1 gathered in preferably scaled groups 2, anticipating the structuring of the stacks 2 outlined hereinafter, in the pockets 24 or parallel channel-like cells of the rack 23, in the order and with criteria determined by the computerised logic of implementation of the method.

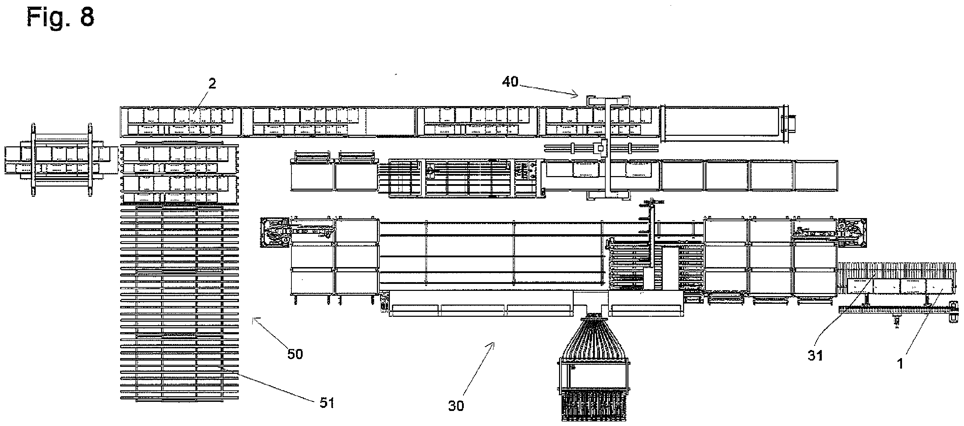

A processing and finishing unit of the panels 1, detailed in figure 8, by means of which, through operating groups of the known type, whose description herein is deemed superfluous, the latter are subjected - in a known fashion - to boring operations, milling operations and edging operations as well as anything else required to finish them to prepare them for assembly, is indicated in its entirety with 30.

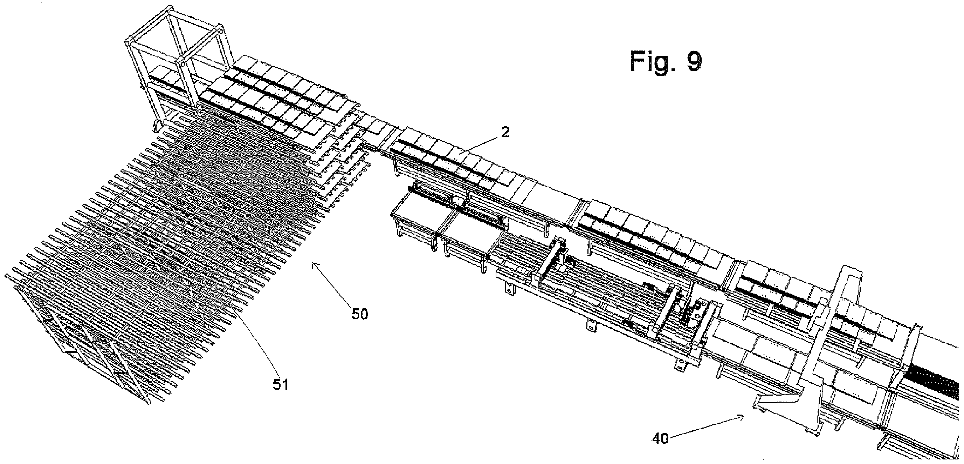

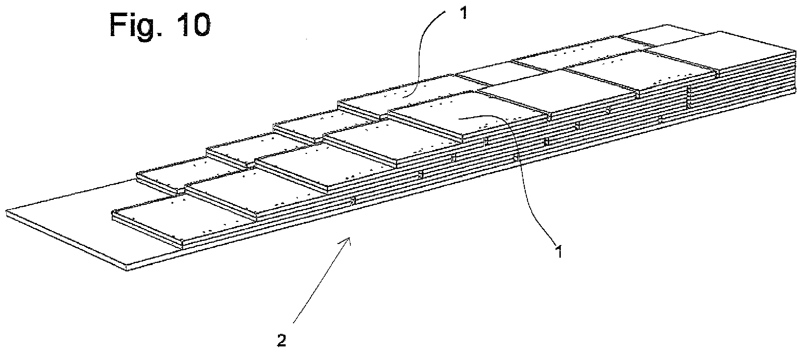

A unit for stacking panels 1, detailed in figure 9, which picks up the panels 1 exiting from the processing and finishing unit 30 and lays them in decreasing order to form scaled stacks 2, as illustrated by way of example in figure 10, preferably reproducing the scaling arrangement of the order previously formed in the carriages 22 and in the packets 24 or parallel channel-like cells of the rack 23 of the handling-sorting unit 20 is indicated in its entirety with 40.

Lastly, a unit for the storage of stacks 2 of panels 1, detailed in figure 9, where the stacks 2 are laid on the rack 51, systematically gathered in the order and with criteria defined by the computerised logic of implementation of the method, to be outlined hereinafter, is indicated in its entirety with 50.

### Dynamic description of the embodiments

Thus, having completed the static description of a preferred embodiment of the device for the optimisation management of the production lines of panels in the furniture industry according to the present invention, below is the dynamic description, or the relative operation, i.e. the method for the optimisation management of the production lines of panels in the furniture industry according to the present invention, regarding the exemplifying device and operating line of relative implementation:
the preliminary step is the acquisition, by the management software, of the distinct base with the coding of data regarding:
   the types of piece of furniture, colours of the types of furniture, the size of every type of furniture, the size of the panel components of each type of furniture, the overall length of the panel components of each type of furniture;
   orders, identification of the single pieces of furniture in every order, the colours of the types furniture in every order, the quantification of each type of furniture in every order, the priorities of the delivery expiry dates of the orders;
   functions and functionalities of the management system, or the production line, with specific reference, as regards description purposes of the present invention, to the allocation of an identification code to the panels 1 defined by the nesting process 12, the positioning in the handling-sorting unit 20 of the carriages 22 compared to the its translation capabilities with respect to the ground, the number and size of the pockets or parallel channel-like cells 24 of the rack 23 of the carriages 22.

Upon processing such data, and any other data fed back from the devices during the operations of the management system, which indicate the processes in course of execution and completed, the management software executes the production launch, preferably organised for order proximity (the criterion which binds various elements or kits of elements based on the grounds of belonging to the same order), as a function of the characteristics of the panels exiting from the nesting device 10 and as a function of the progress and stage of filling the pockets 24 or parallel channel-like cells of the rack 23 of the carriages 22 of the handling-sorting unit 20.

Within the aforementioned preferable order proximity criterion, the launches are organised considering the following criteria:
origin proximity (the criterion which binds various elements on the grounds of belonging to a common material or semi-finished product, specifically the type of sheet material, regarding the thickness, colour);
kit proximity (the criterion which binds various elements on the grounds of belonging to the same kit);
intended use proximity (the criterion which binds various orders, kits and elements in that simultaneously directed to the same end of line gate);
if necessary, process proximity (the criterion which binds various elements on the grounds of having to traverse the same transformation path).

The execution of the generated production launch operations generated by the management software to the management system, primarily to the nesting device 10, and recorded in a cascade fashion as the work sequence for each device and machine of the production line, all of which respond to the their process stage updating the state of launch.

In this context, the nesting device 10 loads the required sheets and produces the launch panels 1, updating the management and the manager regarding every released piece, which is released marked singularly for identification and traceability, by means of a label with barcode and/or integrated chips (*chip*, *RFID - Radio Frequency Identification*, *trasponder*).

When defining for optimised nesting process of the single panels, they can also possibly be subjected to processing operations, for example boring the surface, anticipating its operations thereof, at this level, of the subsequent processing and finishing 30 unit.

Upon exiting from the nesting device 10, the panels 1 are gripped by the handling-sorting unit 20, constituting the device for the implementation of the method according to the present invention:
the panels 1, laid on a plane on their larger surface, are gathered exiting from the nesting device 10 on the conveying line 11, lifted singularly by the suspended handling - gripping - orienting means 25, Cartesian in the illustrated embodiment, or alternatively anthropomorphic, and transferred and dropped from the top selectively housed vertically laid on the side oriented vertically in the pockets or adjacent horizontal parallel channel-like cells 24 of the rack 23 of the two carriages 22, alternatingly mobile on the closed circuit or turntable 21.

Considering the movement of the carriages 22, the suspended handling - gripping - directing means 25 reach all topography points of the carriages 22 to execute such operations of gripping the panels 1, orientation, selective insertion in vertical position in the cells 24, released therein to form parallel rows.

Such execution of the operations of gripping the panels 1, orientation, selective introduction in vertical position in the cells 24, released therein to form parallel rows, movement of the carriages 22, are carried out upon demand by the management system to reproduce the arrangement of the order and within each order for grouping pieces constituting a single piece of furniture, so that within each order the sequence of the kit constituting each piece of furniture is sorted according to the length of the panels 1.

In other words the preferable use of the method and device according to the present invention comprises the immediate creation, downstream of the cutting station, of the definite arrangement of the order and order content, which will be maintained during the processing and subsequently during packaging, by housing the panels 1 vertically laid on the side vertically oriented in the parallel channel-like cells 24, with the aim of reducing the planar space and sorted by lines and columns, dividing them by order, selecting and sorting them by dimension within the order in scaled configuration, as programmed by the electronic logic which acquired all the method data;

Without interruption, but with the organic flow of kits and orders, within the same translation on the circuit 21 of the carriages 22, they are deprived of the panels 1 by the extractor 26 at the end of the processing and finishing unit 30, preferably through the lateral thrust in the direction of the linearity of the cells 24, and then tilted on the plane on the supply means 31, to one or more processing operating units 30, in the same grouping order previously defined on the rack 23 of the carriages 22.

Upon reaching the processing and finishing operating unit, i.e. edging and/or structural boring operations, the panels 1 are processed preferably in times synchronised with supply upstream and unloading downstream, in the same sequential order of arrival and release, possibly on several operating lines.

At the end, the panels 1 are unloaded at the stacking unit 40, maintaining the same sequential order, in at least one scaled stack 2 of panels 1 with decreasing length from the bottom to the top, comprising the complete kit constituting each piece of furniture, reproducing the same order for lines and columns allocated to the panels 1 within the racks 23 of the carriages 22, though with vertical orientation therein and with superimposition orientation thereon on the plane on a martyr panel.

The stacks thus composed or re-composed are thus gripped by the storage unit 50 and arranged o the rack 51 to be sent to delivery.

Under another descriptive approach, the method according to the present invention provides for:
a transformation of species with formation of colour or launch wave: to create a production launch several orders bound by origin proximity are incorporated and there follows the nesting of the panels, the criteria according to which the invalidation of a production launch are: delivery priority, performance of the cutting plane and amount of the obtained panels, nesting, stochastic exit of the pieces, marking of every panel for traceability

Time transformation with stochastic picking up of the horizontally-arranged panels and relative arrangement, orientation and ordination as well as translation of grouping being formed and the group preferably formed vertically by arrangement of the order and in each order for grouping of pieces constituting each piece of furniture, so that in each order the sequential order of the kit allows a final unloading in layers with decreasing length and unloading in such order

Transformation of species with the finishing of the panels and boring, milling and possible edging operations in the same sequential order.

Transformation of time maintaining the same sequential order upon the final unloading in pallets of stacks in layers with decreasing length; should the orders contain pieces of furniture with two or more depth orders, the panels may also be sorted in parallel stacks for each depth order.

### Advantages of the invention

As clearly observable from the afore-outlined description of a preferred embodiment and also as mentioned above regarding some variant embodiments, the optimisation management method and system of the production lines of panels in the furniture industry according to the present invention offers advantages corresponding to the attainment of the preset objects and even others:
as a matter of fact, there is provided an innovative and functional process adapted to create a series of transformations which, starting from a step of dividing a sheet into panels with the surface optimiser and with the disorderly exit of the panels, executes a systematic unloading of the orders and kit, reducing all passive operations to the minimum;
in addition, there is provided an operating line, the reduced or reducible as much as possible in the relative size, for the implementation of the process thus implemented.

In particular the structure of the moveable carriages with respect to the ground with cells loadable and unloadable from the top as well as by slipping them off from the side constitutes an extremely flexible reservoir for distributing the panels, with structuring which maximises the reduction of the logistic spaces and exploits the force of gravity for filling and maintaining the panels in the group.

The concept of immediate formation of a systematic composition to execute the order allows maintaining the order up to the end of the operating cycle, substantially with a single transformation of time, or with the minimisation of the passive operations.

### KEY TO THE REFERENCE NUMBERS

1) panels
2) stacks of panels
3) commercial panel sheets
10) nesting device in its entirety
11) conveyor line
20) handling-sorting unit in its entirety
21) tracks
22) carriage
23) rack
24) pockets or parallel channel-like cells of the rack
25) suspended handling device
26) extractor
30) processing and finishing unit in its entirety
31) processing and finishing conveyor unit
40) panel stacking unit in its entirety
50) storage unit in its entirety
51) storage rack

## Claims

1. Method for the optimisation management of the production lines of panels in the furniture industry, particularly with differentiated elements production organisation, **characterised in that** it comprises at least one module (20) for sorting panels (1) in form of tables in the logistics of the production line preferably pursuing the strategy of grouping the panels (1) by structured orders, or any other criterion useful for the production process, implementing operations for the reception, arrangement, orientation, aggregation and positioning of panels (1) from horizontal positions to vertical positions, as well as translation with respect to the ground of assemblies and groups of panels (1) laid on the side, oriented vertically, sorted by lines and columns on vector-matrix means (22) with parallel linear cells (24), suitable to allow the deposition and extraction of the panels (1) from the top and side in the direction of the linearity of the cells (24), where the contingent order of arrangement or the mapping of the panels (1), the methods of loading and unloading the panels (1) and the translation of the vector-matrix (22) with respect to the ground are defined by a computerised logic optimising the combination of a random-stochastic or tendentially random-stochastic loading of the panels (1) upstream and a tendentially organised unloading for groups as a function of the purpose of the batch and/or the contingent needs of the production line or portion of production line downstream.

2. Method for the optimisation management of the production lines of panels in the furniture industry according to claim one, **characterised in that** it comprises the coding of data regarding furniture as regards typological, chromatic and dimensional features within orders; nesting the panels (1) from the commercial sheets for colour waves compared to the orders, with traceability mark of the pieces (1) in stochastic exit lying horizontally; picking up the panels (1) and relative arrangement, orientation, aggregation and positioning in vertical position in assemblies and groups laid on the side sorted by lines and columns with programmed order of arrangement; translation with respect to the ground with programmed movement of assemblies and groups of panels (1) laid on the side, oriented vertically, sorted by lines and columns with mapping programmed on vector-matrix means (22) with parallel linear cells (24) suitable to allow the deposition and extraction from the top and side in the direction of the linearity of the cells (24); unloading the panels (1) with programmed sequence preferably in the same sequential order of grouping to constitute at least one stack (2) of panels (1) with decreasing length from the bottom to the top comprising the complete kit constituting each piece of furniture in the order.

3. Method for the optimisation management of the production lines of panels in the furniture industry according to any one of claims one and two, **characterised in that** it comprises the:
- codification, interpolation and ordination, with electronic processing supervising the control of the entire method, data regarding the pieces of furniture to be produced as regards the types, colours, overall dimensioning, dimensioning each of the at least panel components (1), cumulative length of the panel components (1), orders to be executed, types, colours, number of the types compared to the colours of the pieces of furniture of each order, priority of execution of the orders;
- optimisation of the cutting by the commercial sheets of the panels (1) constituting the pieces of furniture, with production launch for colour waves tendentially referring to the highest number of orders possible, also possibly with priority criteria of the delivery expiry and thus with traceability mark of the panels (1) in stochastic exit;
- picking up the panels (1) in horizontal and relative arrangement, orientation, aggregation and positioning in vertical position in assemblies and groups laid on the side sorted by lines and columns with programmed order of arrangement on vector-matrix means (22) with parallel linear cells (24), suitable to allow the deposition and extraction of the panels (1) from the top and side in the direction of the linearity of the cells;
- translation with respect to the ground with programmed movement of the vector-matrix means (22) supporting the parallel groups of panels (1) oriented vertically sorted by lines and columns for organising the order and within each order for grouping of pieces constituting a single piece of furniture, so that within each order the sequence of the kit constituting each piece of furniture is sorted by length of the panels (1) and allow an unloading the panels (1) by decreasing length with respect to the operating unit downstream;
- unloading the panels (1) preferably for side thrust in the direction of the linearity of the cells (24) and relative tilting of the supply means (31) on the plane to one or more processing operating units (30) in the same order of grouping defined on the vector-matrix means (22);
- processing and defining of the panels (1) in tempi synchronized with supply upstream and unloading downstream in the same sequential order of delivery and release, suitably on several operating lines;
- unloading the panels (1) maintaining the same sequential order in at least one scaled stack (2) of panels (1) with decreasing length from the bottom to the top comprising the complete kit constituting each piece of furniture.

4. Device and operating line for the implementation of the method according to any one of the preceding claims, **characterised in that** it comprises at least one sorting complex (20) within the development of the production line constituted by at least one handling - sorting unit (20) which includes at least one container with cells or vector-matrix (22) translatable with respect to the ground, suitable to hold a plurality of panels (1) laid on the side oriented vertically in parallel channels (24) and sorted by lines and columns, contingently insertable and removable both from the top and the side, where the contingent order of arrangement or mapping of the panels (1), the methods of loading and unloading the panels (1) and the translation of the container with cells or vector-matrix (22) with respect to the ground are defined by a computerised logic optimising the combination of a stochastic or tendentially stochastic loading of the panels (1) upstream and a tendentially organised unloading for groups of panels (1) as a function of the purpose of the batch and/or the contingent needs of the production line or portion of production line downstream.

5. Device and operating line according to the preceding claim for the implementation of the method according to any one of claims one to three, **characterised in that** it comprises a nesting device (10) for cutting the panels (1) from commercial sheets (3); means for marking each and every panel (1) in stochastic exit with barcode and/or integrated chip; at least one handling - sorting unit (20) which includes at least one carriage (22) with horizontal rack (23) provided with adjacent parallel pockets or channel-like cells (24) translatable with respect to the ground on guide means (21), in which the panels (1) received by handling means (25) are dropped vertically housed laid on the side oriented vertically on the channel-like cells (24) parallel and sorted by lines and columns, contingently insertable and removable from the top and side; means (26) for unloading the panels (1) from said at least one carriage (22) of said at least one handling-sorting unit (20) with programmed sequence, preferably in the same sequential order of grouping; unit (30) for processing and finishing the panels (1) into which the latter get exiting from the carriages (22) of the handling-sorting unit (20) preferably in the order already formed in the carriages (22); handling means (40) for picking up the finished panels (1) exiting from the processing and finishing unit (30) to constitute at least one stack (2) of panels with decreasing length from the bottom to the top comprising the complete *kit* constituting each piece of furniture in the order and deposition in scaled stacks (2) reproducing the same scale order of the order previously formed in the pockets or channel-like cells (24) of the racks (23) of the carriages (22).

6. Device and operating line according to any one of claims four and five for the implementation of the method according to any one of claims one to three, **characterised in that** it comprises:
- a nesting devicer device (10) for cutting from sheets or commercial panel sheets (3) of the same colour in each production launch of an optimised plurality of panels (1) heterogeneously referring to orders in progress, with possible further finishing processes on the panels (1), cut and being cut, where possible and stochastic release but with barcode marking and/or integrated chip of the panels (1) on the plane on conveyor means (11);
- a handling-sorting unit (20) constituted by at least one but preferably two carriages (22) with horizontal rack (23) alternatingly moveable preferable on tracks on a closed circuit or turntable (21), provided with pockets or parallel adjacent channel-like cells (24) in which the panels (1) separately lifted by suspended handling - gripping - orienting devices (25), Cartesian of anthropomorphic, are transferred and dropped house vertically laid on the side oriented vertically in parallel channel-like cells (24) with the aim of reducing the planar space and sorted by lines and columns, dividing them by order, selecting them and sorting them by dimension in the order in scaled configuration as programmed by the electronic logic after acquiring all the data of the method;
- a unit (30) for processing and finishing the panels (1) in which the latter reach through gripping - translation - orientation means (26) preferably means for thrusting in chute channels exiting from the carriages (22) of the handling-sorting unit (20), possibly by means of a conveyor belt, through a single order and within a single order in the order of dimension previously formed in the carriages (22) of the handling-sorting unit (20);
- handling - gripping - orientation - laying means, Cartesian, anthropomorphic or with a chute (40), for picking the finished panels (1) exiting from the processing and finishing unit(30) and deposition in scaled stacks (2) reproducing the same scale order previously formed on the carriages (22) and in the pockets or channel-like cells (24) of the handling-sorting unit (20);
- means for storing (50) and packaging the stacks (2) of panels (1) of a single order for combining the client's order and tendentially immediately sending to delivery.

7. Device and operating line according to any one of claims four to six for the implementation of the method according to any one of claims one to three, **characterised in that** said pockets or parallel and adjacent channel-like cells (24) of said horizontal racks (23) of said carriages (22) are provided with inwards bristles for holding said panels (1).

## Patentansprüche

1. Verfahren zur Betriebsoptimierung von Fertigungsstraßen für Platten in der Möbelindustrie, insbesondere mit einer Produktionsorganisation bei unterschiedlichen Elementen, **gekennzeichnet durch** wenigstens ein Auftragsmodul (20) in Form von Tabellen zum Sortieren der Platten (1) in der Fertigungsstraßen-Logistik, bei der vorzugsweise die Strategie einer Gruppierung der Platten (1) für strukturierte Aufträge oder jedes anderen für den Produktionsprozess geeignete Kriterium eingesetzt wird zur Durchführung von Arbeitsgängen für den Empfang, die Anordnung, die Ausrichtung und die Positionierung von Platten (1) aus einer horizontalen Lage in eine vertikale Stellung sowie die Verschiebung relativ zum Boden von Baueinheiten und Gruppen von auf der Seite liegenden Platten (1), die vertikal ausgerichtet und in Zeilen und Kolonnen in Vektormatrixmitteln (22) mit parallelen Linearzellen (24) geordnet sind, die die Ablage und die Entnahme der Platten (1) von oben und von der Seite her in Richtung der Linearität der Zellen (24) ermöglichen, wobei die entsprechende Reihenfolge der Anordnung oder der Kartierung der Platten (1), der Modalitäten zur Beschickung und Entnahme der Platten (1) und der Verschiebung der Vektormatrix (22) relativ zum Boden definiert sind durch eine Computerlogik, die die Angleichung einer zufallsstochastischen oder tendentiell zufallsstochastischen Beschickung der Platten (1) stromaufwärts und eine tendentiell gruppenweise Entnahme als Funktion des Zwecks der Charge und/oder der entsprechenden Erfordernisse der Fertigungsstraße oder von stromabwärts liegenden Teilen der Fertigungsstraße optimiert.

2. Verfahren zur Betriebsoptimierung von Fertigungsstraßen für Platten in der Möbelindustrie nach Anspruch 1, **gekennzeichnet durch** die Codierung von Möbeldaten betreffend die Eigenschaften bezüglich Typ, Farbe und Abmessungen innerhalb von Aufträgen, Schnittoptimierung der Platten (1) aus handelsüblichen Tafeln für Farbwellen in Abhängigkeit der Aufträge mit Kennzeichnung der horizontal liegenden Platten (1) am stochastischen Ausgang, Entnahme der Platten (1) und deren Verschiebung, Anordnung, Ausrichtung, Zusammenführung und Vertikalpositionierung in Baueinheiten und Gruppen von auf der Seite liegenden Platten (1), die in Zeilen und Kolonnen in der programmierten Reihenfolge geordnet sind, Verschiebung relativ zum Boden in programmierter Bewegung der Baueinheiten und Gruppen von auf der Seite liegenden, vertikal ausgerichteten Platten (1), die in Zeilen und Kolonnen mit programmierter Reihenfolge auf Vektormatrixmitteln (22) mit parallelen Linearzellen (24) geordnet sind, wodurch eine Ablage und eine Entnahme von oben und im Sinne der Linearität der Zellen (24) und von der Seite her ermöglicht wird, Abgabe der Platten (1) in programmierter Folge, vorzugsweise in derselben Gruppierungs-Reihenfolge zur Bildung von wenigstens einem Stapel (2) von Platten (1) mit von unten nach oben abnehmender Länge, der aus einem kompletten Satz für die Herstellung jedes Möbelstücks im Umfang des Auftrags besteht.

3. Verfahren zur Betriebsoptimierung von Fertigungsstraßen von Platten in der Möbelindustrie nach Anspruch 1 oder 2, **gekennzeichnet durch**:
- Kodierung, Interpolation und Ordnung mit elektronischer Verarbeitung zur Überwachung des gesamten Verfahrens, der Daten bezüglich der herzustellenden Möbel betreffend Typ, Farbe und Gesamtabmessungen, Dimensionierung von wenigstens jeder der Plattenkomponenten (1), der kumulativen Länge der Plattenkomponenten (1), auszuführende Aufträge, Typen, Farben, Anzahl der Typen bezüglich der Farben der Möbel jedes Auftrags, Ausführungspriorität der Aufträge;
- Schnittoptimierung der Platten oder handelsüblichen Tafeln, aus denen die Möbelstücke zusammengesetzt sind, Produktionsstart für die Farbwellen, die sich tendenziell auf die größtmögliche Zahl von Aufträgen beziehen, ggf. auch mit Prioritätskriterien für den Lieferungstermin und die Markierung zur Kennzeichnung der Platten (1) am stochastischen Ausgang,
- Entnahme der Platten (1) in horizontaler Lage und Verschiebung, Ausrichtung, Zusammenstellung und Vertikalpositionierung in Baueinheiten und Gruppen von auf der Seite liegenden Platten, die in Zeilen und Kolonnen in der programmierten Reihenfolge auf Vektormatrixmitteln (22) mit parallelen Linearzellen (24) geordnet sind, um die Ablage und die Entnahme der Platten (1) von oben und von der Seite in Richtung der Linearität der Zellen zu ermöglichen;
- Verschiebung relativ zum Boden mit programmierter Bewegung der Vektormatrixmittel (22), welche die Gruppen von parallel ausgerichteten Platten (1) in vertikaler Reihung für die Zeilen und Kolonnen zu jedem Auftrag aufnehmen, um die Gruppierung der Teile zu ermöglichen, die jeweils ein einzelnes Möbelstück bilden, so dass für jeden Auftrag die Folge eines Satzes zur Bildung jedes Möbelstücks hinsichtlich der Plattenlänge geordnet ist und die Abgabe der Platten (1) mit abnehmender Länge für jede Betriebseinheit stromabwärts ermöglicht wird;
- Abgabe der Platten (1), vorzugsweise durch seitlichen Schub in Richtung der Linearität der Zellen (24) und Kippen in die Ebene auf Beschickungsmittel (31) zu einer oder mehrerer Bearbeitungseinheiten (30) in derselben Ordnung wie die durch die Vektormatrixmittel (22) definierte Gruppierung;
- Bearbeitung und Endbearbeitung der Platten (1) in synchronisierten Zeiten mit Beschickung von vom und nachgeordneter Abgabe in derselben Reihenfolge wie die Zuführung und die Entnahme, ggf. auf mehrere Fertigungsstraßen;
- Abgabe der Platten (1) unter Beibehaltung derselben Reihenfolge wie in wenigstens einem gestuften Stapel (2) von Platten (1) mit von unten nach oben abnehmender Länge, der einen kompletten Satz zur Herstellung jedes Möbelstücks bildet.

4. Vorrichtung und Fertigungsstraße für die Durchführung des Verfahrens nach einem der vorhergehenden Ansprüche, **gekennzeichnet durch** wenigstens eine Sortiervorrichtung (20) innerhalb der Erstreckung der Fertigungsstraße, die aus wenigstens einer Manipulier-Sortiereinheit (20) besteht und wenigstens einen Behälter mit Zellen oder Vektormatrixmitteln (22) umfasst, der relativ zum Boden verschiebbar ist und dazu dient, eine Vielzahl von Platten (1) zu halten, die auf der Seite liegen und in parallelen Kanälen (24) vertikal ausgerichtet, in Zeilen und Kolonnen sortiert und sowohl von oben als auch von der Seite her einsetzbar und herausnehmbar sind, wobei die Anordnung und Gruppierung der Platten (1), die Verfahren zum Beschicken und zur Entnahme der Platten (1) und die Bewegung des Containers mit Zellen und Vektormatrixmitteln (22) relativ zum Boden definiert ist durch eine Computerlogik zur Optimierung der Angleichung einer stochastischen oder tendenziell stochastischen Beladung der Platten (1) am aufwärtigen Ende und tendenziell organisiert ist zur Abnahme von Gruppen von Platten (1) in Abhängigkeit vom Zweck einer Charge und/oder der entsprechenden Erfordernisse der Fertigungsstraße oder des stromabwärtigen Teils der Fertigungsstraße.

5. Vorrichtung und Fertigungsstraße nach dem vorhergehenden Anspruch für die Durchführung des Verfahrens nach einem der Ansprüche 1 bis 3, **gekennzeichnet durch** eine Trenneinheit (10) zum Schneiden der Platten (1) aus handelsüblichen Tafeln (3), Mittel zur Markierung jeder einzelnen Platte (1) am stochastischen Ausgang mit einem Barcode und/oder einem integrierten Chip, wenigstens eine Manipulier-Sortiereinheit (20) mit wenigstens einem Schlitten (22) mit horizontalem Gestell (23), das nebeneinanderliegende, parallele Taschen oder kanalförmige Zellen (24) hat und relativ zu dem Boden auf Führungsmitteln (21) verschiebbar ist, wobei die von Manipuliermitteln (25) aufgenommenen Tafeln (1) vertikal ausgerichtet in die Taschen oder parallelen, kanalförmigen Zellen (24) auf der Seite liegend eingeführt werden und in Zeilen und Kolonnen geordnet sind, wozu sie sowohl von oben als auch von der Seite einsetzbar und herausnehmbar sind, Mittel (26) zum Abgeben der Platten (1) aus dem wenigstens einen Schlitten (22) der Manipulier- und Sortiereinheit (20) in programmierter Reihenfolge, vorzugsweise in derselben Reihenfolge wie bei der Gruppierung; eine Einheit (30) zur Bearbeitung und Endbearbeitung der Platten (1), in welche diese am Ausgang von den Schlitten (22) durch die Manipulier- und Sortiereinheit (20) gelangen, vorzugsweise in der Reihenfolge, in der sie bereits in die Schlitten (22) gelangt sind; Manipuliermittel (40) zur Entnahme der bearbeiteten Platten (1) am Ausgang der Einheit zur Bearbeitung und Endbearbeitung (30) für die Herstellung von wenigstens einem Stapel (2) von Tafeln mit von unten nach oben abnehmender Länge, der einen Satz zur Herstellung jedes Möbelstücks im Umfang des Auftrags und der Ablage eines gestuften Stapels (2) bildet, der dieselbe Stufenordnung für den bereits gebildeten, stufenförmigen Auftragsstapel in den Taschen oder kanalförmigen Zellen (24) des Gestells (23) der Schlitten (22) hat.

6. Vorrichtung und Fertigungsstraße nach Anspruch 4 oder 5 für die Durchführung des Verfahrens nach einem der Ansprüche 1 bis 3, **gekennzeichnet durch**:
- eine Verschachtelungseinheit (10) zum Schneiden von Tafeln oder handelsüblichen Platten (3) gleicher Farbe für jeden Produktionsstart einer optimierten Zahl von Platten (1), die sich heterogen auf die eingeleiteten Aufträge beziehen und ferner mögliche weitere Bearbeitungsprozesse für die Platten (1) haben, die geschnitten sind und geschnitten werden und sofern möglich eine stochastische Abgabe mit Barcode-Markierung und/oder integriertem Chip für die Platten (1) auf der Ebene von Fördermitteln (11) vorgesehen sind;
- eine Manipulier- und Sortiereinheit (20), bestehend aus wenigstens einem, vorzugsweise zwei Schlitten (22) mit horizontalem Gestell (23), die alternierend beweglich sind, vorzugsweise auf Schienen eines geschlossenen Kreises eines Drehtellers (21), ausgerüstet mit Taschen oder parallelen, kanalartigen Zellen (24), in denen die Platten (1) einzeln durch hängende, kartesische oder anthropomorphische Vorrichtungen (25) zur Manipulierung, Erfassung und Ausrichtung angehoben und diese auf der Seite liegend und in vertikaler Ausrichtung in die parallelen, kanalförmigen Zellen (24) überführt werden mit dem Ziel, die Platten (1) platzsparend in Reihen oder Kolonen zu sortieren und sie entsprechend dem Auftrag zu trennen, zu sortieren und hinsichtlich der Abmessungen in gestaffelter Konfiguration entsprechend der elektronischen Logik nach Erhalt aller Daten des Verfahrens anzuordnen;
- eine Einheit (30) zur Bearbeitung und Endbearbeitung der Platten (1), in die diese durch Greif-, Transport- und Ausrichtmittel (26) gelangen, vorzugsweise mit Schieber in Gleitkanälen am Ausgang der Schlitten (22) der Manipulier-Sortiereinheit (20), ggf. mit einem Förderband, in der Reihenfolge jedes einzelnen Auftrags und in der Reihenfolge der in den Schlitten (22) der Einheit (20) gebildeten Abmessungen,
- Mittel zur kartesianischen, anthropomorphischen oder mit Rutsche (40) durchgeführten Manipulierung, Erfassung, Ausrichtung und Ablage der bearbeiteten Platten (1) am Ausgang der Einheit (30) für die Bearbeitung und Endbearbeitung und zur Abgabe in gestuften Stapeln (2), welche dieselbe Abstufung wie die bereits gebildeten Stapel auf den Schlitten (22) haben, in die Taschen oder kanalförmigen Zellen (24) der Manipulier-Sortiereinheit (20);
- Mittel zum Speichern (50) und Verpacken der Stapel (2) der Platten (1) eines einzigen Auftrags für die Zusammenstellung des Kundenauftrags, ggf. mit sofortiger Versendung.

7. Vorrichtung und Fertigungsstraße nach einem der Ansprüche 4 bis 6 für die Durchführung des Verfahrens nach einem der Ansprüche 1 bis 3, **dadurch gekennzeichnet, dass** die Taschen oder parallel nebeneinander liegenden, kanalförmigen Zellen (24) der horizontalen Gestelle (23) der Schlitten (22) mit nach innen gerichteten Bürsten zum Halten der Platten (1) ausgerüstet sind.

## Revendications

1. Méthode pour la gestion optimisée des lignes de production de panneaux dans l'industrie du meuble, en particulier avec une organisation de production comprenant différents éléments, **caractérisée en ce que** celle-ci comprend au moins un module (20) pour le tri de panneaux (1) sous la forme de tableaux dans la logistique de la ligne de production, en suivant de préférence la stratégie de regroupement des panneaux (1) par commandes structurées, ou tout autre critère utile pour le processus de production, les opérations de mise en oeuvre pour la réception, la disposition, l'orientation, l'agrégation et le positionnement de panneaux (1) de positions horizontales à des positions verticales, ainsi que le déplacement par rapport au sol d'ensembles et de groupes de panneaux (1) posés sur le côté, orientés verticalement, triés par lignes et colonnes sur des moyens de matrice vectorielle (22) avec des cellules linéaires parallèles (24), appropriés pour permettre le dépôt et l'extraction des panneaux (1) par le haut et le côté dans la direction de la linéarité des cellules (24), où l'ordre contingent de disposition ou le mappage des panneaux (1), les méthodes de chargement et de déchargement des panneaux (1) et le déplacement de la matrice vectorielle (22) par rapport au sol sont définis par une logique informatisée optimisant la combinaison d'un chargement aléatoire stochastique ou à tendance aléatoire stochastique des panneaux (1) en amont et d'un déchargement à tendance organisée pour des groupes en tant que fonction de l'objectif du lot et/ou des besoins éventuels de la ligne de production ou d'une partie de la ligne de production en aval.

2. Méthode pour la gestion optimisée des lignes de production de panneaux dans l'industrie du meuble selon la revendication 1, **caractérisée en ce que** celle-ci comprend le codage de données concernant les meubles quant à des caractéristiques typologiques, chromatiques et dimensionnelles dans des commandes ; l'emboîtement des panneaux (1) à partir des plaques commerciales pour des ondes de couleur comparées aux commandes, avec une marque de traçabilité des pièces (1) dans la sortie stochastique dans une disposition horizontale ; la collecte des panneaux (1) et la disposition, l'orientation, l'assemblage et le positionnement relatifs dans une position verticale dans des ensembles et des groupes posés sur le côté, triés par lignes et colonnes avec un ordre de disposition programmé ; le déplacement par rapport au sol avec un mouvement programmé d'ensembles et de groupes de panneaux (1) posés sur le côté, orientés verticalement, triés par lignes et colonnes avec un mappage programmé sur des moyens de matrice vectorielle (22) avec des cellules linéaires parallèles (24), appropriés pour permettre le dépôt et l'extraction par le haut et le côté dans la direction de la linéarité des cellules (24) ; le déchargement des panneaux (1) avec une séquence programmée de préférence dans le même ordre de regroupement séquentiel pour constituer au moins une pile (2) de panneaux (1) avec une longueur décroissante à partir du bas vers le haut, comprenant le kit complet constituant chaque meuble dans la commande.

3. Méthode pour la gestion optimisée des lignes de production de panneaux dans l'industrie du meuble selon l'une quelconque des revendications 1 et 2, **caractérisée en ce qu'**elle comprend :
- la codification, l'interpolation et l'ordination, avec un processus électronique supervisant la commande de la méthode dans son ensemble, de données concernant les meubles à produire, quant aux types, aux couleurs, aux dimensions globales, aux dimensions de chacun des composants de panneau (1), la longueur cumulée des composants de panneau (1), les ordres à exécuter, les types, les couleurs et le nombre des types comparés aux couleurs des meubles de chaque commande, la priorité d'exécution des commandes ;
- l'optimisation de la coupe par les plaques commerciales des panneaux (1) constituant les meubles, avec un lancement de production pour des ondes de couleur faisant tendanciellement référence au plus grand nombre de commandes possible, éventuellement également avec des critères de priorité de l'échéance de livraison et donc avec une marque de traçabilité des panneaux (1) dans une sortie stochastique ;
- la collecte des panneaux (1) dans une disposition horizontale et relative, l'orientation, l'assemblage et le positionnement dans une position verticale dans des ensembles et des groupes posés sur le côté, triés par lignes et colonnes avec un ordre de disposition programmé sur des moyens de matrice vectorielle (22) avec des cellules linéaires parallèles (24), appropriés pour permettre le dépôt et l'extraction des panneaux (1) par le haut et le côté dans la direction de la linéarité des cellules ;
- le déplacement par rapport au sol avec un mouvement programmé des moyens de matrice vectorielle (22) supportant les groupes parallèles de panneaux (1) orientés verticalement, triés par lignes et colonnes pour organiser la commande et dans chaque commande pour regrouper des pièces constituant un seul meuble, de manière à ce que dans chaque commande, la séquence du kit constituant chaque meuble soit triée en fonction de la longueur des panneaux (1), et pour permettre un déchargement des panneaux (1) par longueur décroissante par rapport à l'unité opérationnelle en aval ;
- le déchargement des panneaux (1) de préférence pour une poussée latérale dans la direction de la linéarité des cellules (24), et une inclinaison relative des moyens d'alimentation (31) sur le plan vers une ou plusieurs unités opérationnelles de traitement (30) dans le même ordre de groupement défini sur les moyens de matrice vectorielle (22) ;
- le traitement et la définition des panneaux (1) selon des tempos synchronisés avec l'alimentation en amont et le déchargement en aval, dans le même ordre séquentiel de livraison et de sortie, avantageusement sur plusieurs lignes d'exploitation ;
- le déchargement des panneaux (1) en maintenant le même ordre séquentiel dans au moins une pile adaptée (2) de panneaux (1) avec une longueur décroissante du bas vers le haut, comprenant le kit complet constituant chaque meuble.

4. Dispositif et ligne d'exploitation pour la mise en oeuvre de la méthode selon l'une quelconque des revendications précédentes, **caractérisé en ce qu'**il comprend au moins un complexe de tri (20) dans le développement de la ligne d'exploitation constituée d'au moins une unité de traitement - tri (20) comprenant au moins un conteneur avec des cellules ou une matrice vectorielle (22) déplaçable par rapport au sol, appropriée pour contenir une pluralité de panneaux (1) posés sur le côté, orientés verticalement dans des canaux parallèles (24) et triés par lignes et par colonnes, éventuellement aptes à être insérés et retirés par le haut et le côté, où l'ordre contingent de disposition ou le mappage des panneaux (1), les méthodes de chargement et de déchargement des panneaux (1) et le déplacement du conteneur avec des cellules ou une matrice vectorielle (22) par rapport au sol sont définis par une logique informatisée optimisant la combinaison d'un chargement stochastique ou à tendance stochastique des panneaux (1) en amont et d'un déchargement à tendance organisée pour des groupes de panneaux (1) en tant que fonction de l'objectif du lot et/ou des besoins éventuels de la ligne de production ou d'une partie de la ligne de production en aval.

5. Dispositif et ligne d'exploitation selon la revendication précédente, pour la mise en oeuvre de la méthode selon l'une quelconque des revendications 1 à 3, **caractérisé en ce qu'**il comprend un dispositif d'emboîtement (10) pour la coupe des panneaux (1) à partir de plaques commerciales (3) ; un moyen permettant de marquer chaque panneau (1) dans une sortie stochastique avec un code-barres et/ou une puce intégrée ; au moins une unité de traitement - tri (20) comprenant au moins un chariot (22) avec un rack horizontal (23) doté de poches parallèles adjacentes ou de cellules du genre canaux (24) déplaçables par rapport au sol sur un moyen de guidage (21), dans lequel les panneaux (1) reçus par des moyens de manipulation (25) sont déposés en étant placés verticalement et posés sur le côté, orientés verticalement sur les cellules du genre canaux (24) parallèlement et triés par lignes et par colonnes, tout en étant éventuellement aptes à être insérés et retirés par le haut et le côté ; des moyens (26) permettant de décharger les panneaux (1) à partir dudit au moins un chariot (22) de ladite unité de traitement - tri (20) selon une séquence programmée, de préférence dans le même ordre séquentiel de regroupement ; une unité de traitement et de finition (30) des panneaux (1), dans laquelle ceux-ci sont sortis des chariots (22) de l'unité de traitement - tri (20), de préférence dans l'ordre déjà formé dans les chariots (22) ; des moyens de manutention (40) pour la collecte des panneaux (1) finis sortant de l'unité de traitement et de finition (30) pour constituer au moins une pile (2) de panneaux avec une longueur décroissante en partant du bas vers le haut, comprenant le kit complet constituant chaque meuble dans la commande, et dépôt en piles dimensionnées (2) reproduisant le même ordre de dimensions de l'ordre formé précédemment dans les poches ou cellules du genre canaux (24) des racks (23) des chariots (22).

6. Dispositif et ligne d'exploitation selon l'une quelconque des revendications 4 et 5, pour la mise en oeuvre de la méthode selon l'une quelconque des revendications 1 à 3, **caractérisé en ce qu'**il comprend :
- un dispositif d'emboîtement (10) pour la coupe à partir de plaques ou de plaques de panneaux commerciales (3) de la même couleur dans chaque lancement de production d'une pluralité optimisée de panneaux (1) faisant référence de façon hétérogène à des commandes en cours, avec des processus de finition supplémentaires possibles sur les panneaux (1), coupés et en train d'être coupés, avec un retrait possible et stochastique mais avec un marquage de code-barres et/ou une puce intégrée des panneaux (1) sur la plan sur un moyen de transport (11) ;
- une unité de traitement - tri (20) constituée par au moins un mais de préférence deux chariots (22) avec un rack horizontal (23) déplaçable en alternance de préférence sur des voies sur un circuit fermé ou une table tournante (21), doté de poches ou de cellules du genre canaux (24) adjacentes parallèles, dans lesquelles les panneaux (1) soulevés séparément par des dispositifs de manipulation - préhension - orientation suspendus (25), Cartésiens ou anthropomorphiques, sont transférés et déposés en étant placés verticalement et posés sur le côté, orientés verticalement dans ces cellules du genre canaux (24) parallèles, avec le but de réduire l'espace planaire, et triés par lignes et par colonnes, en les divisant par commandes, en les sélectionnant et en les triant par dimensions, dans l'ordre dans une configuration dimensionnée, selon une programmation par la logique électronique, après acquisition de toutes les données de la méthode ;
- une unité (30) pour le traitement et la finition des panneaux (1), dans laquelle ceux-ci atteignent, par des moyens de préhension - déplacement - orientation (26), de préférence des moyens de poussée en chute, des canaux sortant des chariots (22) de l'unité de traitement - tri (20), éventuellement à l'aide d'une courroie de transport, à travers un seul ordre et dans une seule commande dans l'ordre de dimensions formé précédemment dans les chariots (22) de l'unité de traitement - tri (20) ;
- des moyens de manipulation - préhension - orientation - pose, Cartésiens, anthropomorphiques ou avec une chute (40), pour collecter les panneaux (1) finis sortant de l'unité de traitement et de finition (30), et les déposer dans des piles dimensionnées (2) reproduisant le même ordre de dimensions formé précédemment sur les chariots (22) et dans les poches ou cellules du genre canaux (24) de l'unité de traitement - tri (20) ;
- un moyen de stockage (50) et d'emballage des piles (2) de panneaux (1) d'une seule commande pour combiner la commande du client et l'envoyer immédiatement pour la livraison.

7. Dispositif et ligne d'exploitation selon l'une quelconque des revendications 4 à 6, pour la mise en oeuvre de la méthode selon l'une quelconque des revendications 1 à 3, **caractérisé en ce que** lesdites poches ou cellules du genre canaux (24) parallèles et adjacentes desdits racks horizontaux (23) desdits chariots (22) sont pourvus de poils orientés vers l'intérieur pour le maintien desdits panneaux (1).
